(19)

**Europäisches Patentamt**
**European Patent Office**
**Office européen des brevets**

(11) **EP 4 513 694 A1**

(12) **EUROPÄISCHE PATENTANMELDUNG**

(43) Veröffentlichungstag:
**26.02.2025 Patentblatt 2025/09**

(21) Anmeldenummer: **23192693.2**

(22) Anmeldetag: **22.08.2023**

(51) Internationale Patentklassifikation (IPC):
**H02H 3/00** *(2006.01)* **H02H 1/00** *(2006.01)*
**H02H 7/26** *(2006.01)*

(52) Gemeinsame Patentklassifikation (CPC):
**H02H 3/006;** H02H 1/0092; H02H 7/26

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Hammer, Thomas**
**91334 Hemhofen (DE)**
• **Lin, Guosong**
**91058 Erlangen (DE)**

(74) Vertreter: **Siemens Patent Attorneys**
**Postfach 22 16 34**
**80506 München (DE)**

(54) **PROGRAMMIEREN VON SCHUTZGERÄTEN EINES ENERGIEVERSORGUNGSNETZWERKS**

(57) Die Erfindung betrifft ein Verfahren zum Parametrieren von Schutzgeräten (20, 22, 24, 26, 28, 30) eines Energieversorgungsnetzwerks (10), an welches eine Mehrzahl von Einrichtungen (12, 14, 16, 18) angeschlossen ist, von denen wenigstens eine Energie vom Energieversorgungsnetzwerk (10) empfängt und wenigstens eine Energie an das Energieversorgungsnetzwerk (10) abgibt, und welches eine Mehrzahl von Schaltgeräten (20, 22, 24, 26, 28, 30) zum Steuern einer Energieverteilung innerhalb des Energieversorgungsnetzwerks (10) aufweist, wobei Schaltzustände der Schaltgeräte (32, 34, 36, 38, 40, 42) zu einem vorgegebenen Zeitpunkt einen jeweiligen Betriebszustand des Energieversorgungsnetzwerks (10) bilden, wobei jedes Schutzgerät (20, 22, 24, 26, 28, 30) für einen jeweiligen Betriebszustand des Energieversorgungsnetzwerks einen betriebszustandsspezifischen Parametersatz nutzt, um für diesen Betriebszustand eine gewünschte Schutzfunktion durch das jeweilige Schutzgerät (20, 22, 24, 26, 28, 30) zu realisieren. Erfindungsgemäß werden für wenigstens ein Schutzgerät die betriebszustandsspezifischen Parametersätze ausgewertet, um schaltgerätereduzierte Parametersätze zu ermitteln, die unabhängig von Schaltzuständen wenigstens eines der Schaltgeräte sind.

Fig. 1

FIG 1

EP 4 513 694 A1

**Beschreibung**

Die Erfindung betrifft ein Verfahren zum Parametrieren von Schutzgeräten eines Energieversorgungsnetzwerks, an welches eine Mehrzahl von Einrichtungen angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten zum Steuern einer Energieverteilung innerhalb des Energieversorgungsnetzwerks aufweist, wobei Schaltzustände der Schaltgeräte zu einem vorgegebenen Zeitpunkt einen jeweiligen Betriebszustand des Energieversorgungsnetzwerks bilden, wobei jedes Schutzgerät für einen jeweiligen Betriebszustand des Energieversorgungsnetzwerks einen betriebszustandsspezifischen Parametersatz nutzt, um für diesen Betriebszustand eine gewünschte Schutzfunktion durch das jeweilige Schutzgerät zu realisieren. Weiterhin betrifft die Erfindung eine Einrichtung zum Ermitteln von Parametersätzen für Schutzgeräte eines Energieversorgungsnetzwerks, an welches eine Mehrzahl von Einrichtungen angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten zum Steuern einer Energieverteilung innerhalb des Energieversorgungsnetzwerks aufweist, wobei Schaltzustände der Schaltgeräte zu einem vorgebbaren Zeitpunkt einen jeweiligen Betriebszustand des Energieversorgungsnetzwerks bilden, wobei jedes Schutzgerät für einen jeweiligen Betriebszustand des Energieversorgungsnetzwerks einen betriebszustandsspezifischen Parametersatz nutzt, um für diesen Betriebszustand eine gewünschte Schutzfunktion durch das jeweilige Schutzgerät zu realisieren. Schließlich betrifft die Erfindung auch einen Leitstand für ein Energieversorgungsnetzwerk, an welches eine Mehrzahl von Einrichtungen angeschlossen ist, von denen wenigstens eine Energie vom Energieversorgungsnetzwerk empfängt und wenigstens eine Energie an das Energieversorgungsnetzwerk abgibt, und welches eine Mehrzahl von Schaltgeräten zum Steuern einer Energieverteilung innerhalb des Energieversorgungsnetzwerks aufweist, wobei Schaltzustände der Schaltgeräte zu einem vorgegebenen Zeitpunkt einen jeweiligen Betriebszustand des Energieversorgungsnetzwerks bilden, wobei das Energieversorgungsnetzwerk Schutzgeräte für den bestimmungsgemäßen Betrieb aufweist, wobei jedes Schutzgerät für einen jeweiligen Betriebszustand des Energieversorgungsnetzwerks einen betriebszustandsspezifischen Parametersatz nutzt, um für diesen Betriebszustand eine gewünschte Schutzfunktion durch das jeweilige Schutzgerät zu realisieren, wobei der Leitstand eine Einrichtung zum Ermitteln von Parametersätzen für die Schutzgeräte des Energieversorgungsnetzwerks aufweist.

Energieversorgungsnetzwerke, insbesondere elektrische Energieversorgungsnetzwerke zum Verteilen von elektrischer Energie, dienen der Energieversorgung von an das Energieversorgungsnetz angeschlossenen Einrichtungen. Das Energieversorgungsnetzwerk ist vorzugsweise ein elektrisches Energieversorgungsnetzwerk, jedoch ist die Erfindung nicht darauf beschränkt und kann ebenso zum Beispiel bei einem Gasversorgungsnetzwerk oder dergleichen eingesetzt werden. Die an das Energieversorgungsnetzwerk angeschlossenen Einrichtungen können über das Energieversorgungsnetzwerk von anderen Einrichtungen Energie beziehen beziehungsweise Energie an diese abgeben. Während des bestimmungsgemäßen Betriebs des Energieversorgungsnetzwerks kann eine der Einrichtungen auch zwischen dem Abgeben von Energie und dem Aufnehmen von Energie wechseln.

Insbesondere bei einem elektrischen Energieversorgungsnetzwerk, besonders bei dem öffentlichen elektrischen Energieversorgungsnetz, sind zunehmend Änderungen hinsichtlich der Betriebszustände und der Topologie des Energieversorgungsnetzwerks zu verzeichnen, beispielsweise aufgrund einer zunehmenden Nutzung von Wind- und/oder Solarenergie. Die Umgestaltung des elektrischen Energieversorgungsnetzwerks hierfür erfordert es, häufig Anpassungen in Bezug auf die E-Verteilung vorzunehmen und diese Anpassungen durch entsprechende eingestellte Schaltzustände der Schaltgeräte zu realisieren. Dadurch können die Zuverlässigkeit und/oder die Betriebssicherheit des Energieversorgungsnetzwerks gewährleistet werden. Diese Überlegungen gelten insbesondere natürlich für ein elektrisches Energieversorgungsnetzwerk, sind jedoch nicht hierauf beschränkt und können zum Beispiel auch bei Energieversorgungsnetzwerken zum Verteilen fluider Stoffe wie zum Beispiel Erdgas, Wasserstoffgas und/oder dergleichen eingesetzt werden.

Aufgrund der vorgenannten Entwicklungen ist es häufig erforderlich, steuernd in das Energieversorgungsnetzwerk vom Leitstand aus einzugreifen und durch Ändern des Betriebszustands die Stabilität der Energieversorgung sicherzustellen. Dies resultiert unter anderem auch daher, weil aufgrund der zunehmenden Einflüsse durch erneuerbare Energien Energieschwankungen nicht nur wie früher verbraucherseitig sondern verstärkt auch erzeugerseitig auftreten können.

Schaltgeräte dienen dabei der Steuerung energietechnischer Verbindungen, beispielsweise elektrischer Leitungen, und können bei einem elektrischen Energieversorgungsnetzwerk als Leistungsschalter, Lastschalter, Trennschalter oder auch Kombinationen hiervon ausgebildet sein, je nach Bedarf. Die vorgenannten Schaltgeräte sind durch die Normung erfasst, sodass von detaillierten Erläuterungen zu deren Funktionalität vorliegend abgesehen wird.

Die Schaltzustände der Schaltgeräte des Energieversorgungsnetzes bilden zu einem jeweiligen Zeitpunkt einen jeweiligen Betriebszustand des Energieversorgungsnetzwerks. Ein jeweiliger Betriebszustand kann zum Beispiel über einen längeren Zeitraum unverändert vorliegen, insbesondere wenn keine Änderung erforderlich ist.

Zur Steuerung und Überwachung der Betriebszustände sind die Schutzgeräte vorgesehen. Die Schutzgeräte können einen Energiefluss sowie Zustände des Energieflusses an einer bestimmten Stelle des Energieversorgungsnetzwerks erfassen und entsprechende Sensorsignale an den Leitstand übermitteln. Darüber hinaus kann auch vorgesehen sein, dass ein jeweiliges Schutzgerät einem jeweiligen Schaltgerät zugeordnet ist und das jeweilige Schaltgerät unmittelbar zu steuern vermag.

Für die Ausübung einer spezifischen Schutzfunktion durch das Schutzgerät nutzt dieses einen jeweiligen Parametersatz. Dieser Parametersatz ist in der Regel spezifisch für einen jeweiligen Betriebszustand. In Bezug auf ein elektrisches Energieversorgungsnetzwerk kann dabei zum Beispiel vorgesehen sein, dass bei Auftreten eines Kurzschlusses eine selektive Auslösung realisiert werden kann, um die Auswirkung des Kurzschlusses auf einen möglichst kleinen Teil des Energieversorgungsnetzwerkes zu begrenzen. Es sind aber auch weitere Szenarien denkbar. Es kann vorgesehen sein, das ein jeweiliges Schutzgerät für jeden Betriebszustand des Energieversorgungsnetzwerks einen jeweiligen Parametersatz nutzt. Die Parametersätze für die jeweiligen Betriebszustände unterschieden sich zumindest teilweise voneinander. Insbesondere können sich sämtliche Parametersätze voneinander unterscheiden. Das gilt natürlich insbesondere auch für Parametersätze von unterschiedlichen Schutzgeräten.

Wird ein Betriebszustand des Energieversorgungsnetzwerks geändert, erfordert dies in der Regel auch, dass die Schutzgeräte einen, vorzugsweise individuellen, betriebszustandsspezifischen Parametersatz nutzen und dann in Bezug auf den neuen Betriebszustand den entsprechenden Parametersatz für ihre Schutzfunktionalität nutzen. Es kann vorgesehen sein, dass für sämtliche denkbaren Betriebszustände entsprechende betriebszustandsspezifische Parametersätze in den jeweiligen Schutzgeräten vorhanden, insbesondere gespeichert, sind. Es kann aber auch vorgesehen sein, dass der Leitstand den jeweils aktuell zu nutzenden betriebszustandsspezifischen Parametersatz unmittelbar an das Schutzgerät übermittelt. In diesem Fall bedarf es nicht der Übermittlung des Betriebszustandssignals an die Schutzgeräte.

Ein jeweiliges Schaltgerät kann in der Regel wenigstens zwei Schaltzustände einnehmen, nämlich einen eingeschalteten Schaltzustand, in dem ein Energiefluss freigegeben ist, und einen ausgeschalteten Schaltzustand, in dem ein Energiefluss unterbrochen ist.

Die Anzahl der Parametersätze für die Schutzgeräte kann jedoch bei bereits einer kleinen Anzahl von Schalt- und Schutzgeräten sehr groß sein. Insbesondere kann sie exponentiell mit der Anzahl der Schaltgeräte zunehmen. Dies führt zu einem erheblichen Aufwand bei der Steuerung des Energieversorgungsnetzwerks durch den Leitstand, welches eine Vielzahl von Schutzgeräten aufweist.

Es ist die Aufgabe der Erfindung, den Steuerungsaufwand für das Energieversorgungsnetzwerk zu reduzieren.

Als Lösung werden mit der Erfindung ein Verfahren, eine Einrichtung sowie ein Leitstand gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass für wenigstens ein Schutzgerät die betriebszustandsspezifischen Parametersätze ausgewertet werden, um schaltgerätereduzierte Parametersätze zu ermitteln, die unabhängig von Schaltzuständen wenigstens eines der Schaltgeräte sind.

In Bezug auf eine gattungsgemäße Einrichtung wird mit der Erfindung insbesondere vorgeschlagen, dass die Einrichtung ausgebildet ist, für wenigstens ein Schutzgerät die betriebszustandsspezifischen Parametersätze auszuwerten, um schaltgerätereduzierte Parametersätze zu ermitteln, die unabhängig von Schaltzuständen wenigstens eines der Schaltgeräte sind.

In Bezug auf einen gattungsgemäßen Leitstand wird mit der Erfindung insbesondere vorgeschlagen, dass die Einrichtung gemäß der Erfindung ausgebildet ist.

Die Erfindung basiert unter anderem auf dem Gedanken, dass Parametersätze vereinfacht werden können, wenn ein oder mehrere Schaltgeräte auf den Betrieb des jeweiligen Schutzgeräts in Bezug auf die Auswahl eines Parametersatzes keine signifikante Auswirkung haben. Das heißt, die Auswahl eines jeweiligen aktuellen Parametersatzes für die Nutzung durch das jeweilige Schutzgerät erfolgt unabhängig davon, welchen Schaltzustand das betreffende jeweilige Schaltgerät, welches zuvor als nicht relevant ermittelt wurde, einnimmt. Das heißt, ein jeweiliger solcher Parametersatz braucht bezüglich dieses Schaltgeräts keine Daten zu enthalten und kann demzufolge vereinfacht realisiert sein. Darüberhinaus ist es dann leitstandseitig auch nicht mehr erforderlich, steuernd in dieses jeweilige Schutzgerät einzugreifen, wenn das als nicht relevant ermittelte Schaltgerät seinen Schaltzustand ändert. Dadurch ist es möglich, den Aufwand zum Anpassen beziehungsweise Steuern des Energieversorgungsnetzwerks deutlich zu reduzieren. Die Erfindung erweist sich besonders dann als vorteilhaft, wenn das Energieversorgungsnetzwerk eine Vielzahl von Schaltgeräten und Schutzgeräten aufweist. Darüber hinaus ist es ebenso auf einfache Weise möglich, den Schutz des Energieversorgungsnetzwerks in hochflexibler Weise auf eine sich ändernde Netzwerktopologie anzupassen. Dies reduziert auch leitstandseitigen Aufwand. Durch den reduzierten Aufwand kann zugleich auch die Zuverlässigkeit und/oder Störfestigkeit des Energieversorgungsnetzwerks verbessert werden.

Die schaltgerätereduzierten Parametersätze können durch das Auswerten der betriebszustandsspezifischen Parametersätze ermittelt werden, indem die Relevanz von Schaltzuständen bestimmter jeweiliger Schaltgeräte ermittelt wird. Zeigt sich nämlich, dass der Schaltzustand eines bestimmten jeweiligen Schaltgeräts für den Betrieb des jeweiligen Schutzgeräts irrelevant ist, kann der entsprechende Parametersatz diesbezüglich reduziert werden, sodass er keine entsprechenden Daten zu enthalten braucht. Dadurch ergibt sich natürlich auch ein leitstandseitiger Vorteil, weil leitstandseitig dann für dieses spezifische Schutzgerät keine Veränderung eines jeweiligen Parametersatzes bewirkt zu werden braucht. Aus dieser Erkenntnis heraus kann der neue schaltgerätereduzierte Parametersatz gewonnen werden. Das Verfahren kann für wenigstens ein Schutzgerät realisiert sein. Vorzugsweise ist es jedoch für eine Mehrzahl der Schutzgeräte, besonders bevorzugt für sämtliche der Schutzgeräte, des Energieversorgungsnetzwerks vorgesehen. Das Ermitteln der schaltgerätereduzierten Parametersätze kann schrittweise für ein jeweiliges Schutzgerät durchgeführt werden. Es kann aber auch vorgesehen sein, dass das Ermitteln der schaltgerätereduzierten Parametersätze zumindest teilweise parallel für mehrere Schutzgeräte durchgeführt wird. Die Erfindung braucht nicht auf alle Schutzgeräte des Energieversorgungsnetzwerks angewendet zu werden. Es kann vorgesehen sein, dass die Erfindung lediglich auf ein Teilnetz des Energieversorgungsnetzwerks, insbesondere dessen Schutzgeräte, angewendet wird. Dies ermöglicht es auch, die Erfindung nachträglich bei Schutzgeräten des Energieversorgungsnetzwerks anzuwenden. Beispielsweise kann die Erfindung sukzessive auf die Schutzgeräte des Energieversorgungsnetzwerks angewendet werden.

Es wird ferner vorgeschlagen, dass für das wenigstens eine Schutzgerät abhängig von den hierzu ermittelten schaltgerätereduzierten Parametersätzen reduzierte Parametersätze ermittelt werden und zum Parametrieren des wenigstens einen Schutzgeräts die reduzierten Parametersätze genutzt werden. Dies reduziert nicht nur den Aufwand bezüglich des Steuerns des Schutzgeräts, sondern es kann auch den leitstandseitigen Aufwand entsprechend reduzieren. Insgesamt können damit auch die Daten reduziert werden. Die reduzierten Parametersätze weisen vorzugsweise keine Daten bezüglich Schaltgeräten auf, die für die Schutzfunktion des jeweiligen Schutzgeräts nicht relevant sind.

Ferner wird vorgeschlagen, dass das Verfahren nacheinander für diejenigen Schaltgeräte durchgeführt wird, für deren Schaltzustände eine Unabhängigkeit der Parametersätze ermittelt wurde. Dies ermöglicht es, dass erfindungsgemäße Verfahren sukzessive für das Energieversorgungsnetzwerk zu realisieren. Es braucht also für den bestimmungsgemäßen Betrieb nicht vorgesehen zu sein, dass für sämtliche Schutzgeräte bereits zuvor das Verfahren durchgeführt wurde. Vielmehr ermöglicht es diese Ausgestaltung, das Verfahren auch nachträglich bei einem Energieversorgungsnetzwerk zu installieren. Dadurch können die reduzierten Parametersätze auf einfache Weise ermittelt werden.

Weiterhin wird vorgeschlagen, dass die schaltgerätereduzierten Parametersätze für ein jeweiliges Schutzgerät die jeweiligen betriebszustandsspezifischen Parametersätze ersetzen. Vorzugsweise werden ausschließlich schaltgerätereduzierte Parametersätze von den Schutzgeräten genutzt. Die bisher genutzten betriebszustandsspezifischen Parametersätze brauchen daher zumindest teilweise nicht mehr verfügbar zu sein. Beispielsweise kann vorgesehen sein, dass die betriebszustandsspezifischen Parametersätze für dieses Schutzgerät gelöscht werden und die schaltgerätereduzierten Parametersätze an deren Stelle treten. Es kann aber auch vorgesehen sein, dass die betriebszustandsspezifischen Parametersätze lediglich deaktiviert werden und so im bestimmungsgemäßen Betrieb des Energieversorgungsnetzes nicht ohne zusätzliche Maßnahmen aktiviert werden können. Dadurch besteht die Möglichkeit, beispielsweise bei einer Topologieänderung, die für den schaltgerätereduzierten Parametersatz relevant sein könnte, das vorgenommene Ersetzen rückgängig zu machen, um die Topologieänderung ergänzend berücksichtigen zu können. Die Flexibilität kann dadurch weiter erhöht werden.

Gemäß einer Weiterbildung wird vorgeschlagen, dass das Parametrieren des wenigstens einen Schutzgeräts durch einen Leitstand des Energieversorgungsnetzwerks erfolgt. Dadurch kann eine zuverlässige Parametrierung der Schutzgeräte realisiert werden. Darüber hinaus kann erreicht werden, dass unberechtigte Eingriffe bei Schutzgeräten vor Ort vermieden werden können. Dies erhöht insbesondere auch die Sicherheit des bestimmungsgemäßen Betriebs des Energieversorgungsnetzwerks.

Darüber hinaus wird vorgeschlagen, dass der Leitstand eine Änderung des Energieversorgungsnetzes in Bezug auf wenigstens eines der Schaltgeräte oder wenigstens eines durch das Schaltgerät ermöglichten Schaltzustands ermittelt und die betriebszustandsspezifischen Parametersätze für die Schutzgeräte anpasst. Auch diese Weiterbildung ermöglicht es, Topologieänderungen am Energieversorgungsnetzwerk zu berücksichtigen.

Ferner wird vorgeschlagen, dass für das wenigstens eine Schutzgerät das Auswerten auf Basis der angepassten betriebszustandsspezifischen Parametersätze wiederholt wird, um neue schaltgerätereduzierte Parametersätze zu ermitteln, die unabhängig von Schaltzuständen wenigstens eines der Schaltgeräte sind. Diese Weiterbildung ermöglicht es, nachträglich vorgenommene Änderungen an der Topologie des Energieversorgungsnetzwerks bei der Erstellung der Parametersätze zu berücksichtigen.

Darüber hinaus wird vorgeschlagen, dass die reduzierten Parametersätze auf Basis der neuen schaltgerätereduzierten Parametersätze aktualisiert werden. Es ist daher also möglich, das erfindungsgemäße Verfahren auch nachträglich, das heißt nach einer Topologieänderung des Energieversorgungsnetzwerks, zu berücksichtigen und anzuwenden. Die erfindungsgemäßen Vorteile können dadurch auch bei Topologieänderungen des Energieversorgungsnetzwerks weiterhin erreicht werden.

Gemäß einem weiteren Aspekt, der sich als besonders vorteilhaft in Verbindung mit dem Erfindungsgedanken erweist, jedoch nicht hierauf beschränkt ist und auch unabhängig von schalterreduzierten Parametersätzen sehr vorteilhaft ist, wird vorgeschlagen, dass unabhängig vom bestimmungsgemäßen Betrieb des Energieversorgungsnetzwerks eine Schaltungsstruktur des Energieversorgungsnetzwerks ermittelt wird, wobei die Parametersätze für die Schutzgeräte entkoppelt vom bestimmungsgemäßen Betrieb des Energieversorgungsnetzwerks ermittelt werden. Dadurch ist es möglich, die Parametersätze, insbesondere die schalterreduzierten Parametersätze losgelöst vom bestimmungsgemäßen Betrieb des Energieversorgungsnetzwerks, das heißt, vorzugsweise nach Art eines Offline-Betriebsmodus, zu ermitteln. Hierzu kann zum Beispiel die Einrichtung zum Ermitteln von Parametersätzen für Schutzgeräte genutzt werden. Diese Einrichtung kann vom Energieversorgungsnetzwerk entkoppelt werden, um im entkoppelten Zustand die Parametersätze, insbesondere die schalterreduzierten Parametersätze zu ermitteln. Insbesondere kann dies zum Beispiel im Leitstand realisiert sein. Die Einrichtung verfügt vorzugsweise über Daten in Bezug auf die Schalt- und Schutzgeräte sowie insbesondere auch in Bezug auf eine Topologie beziehungsweise Struktur des Energieversorgungsnetzwerks. So kann die Einrichtung zum Beispiel auf Basis der Topologie des Energieversorgungsnetzwerks und der Kombination aller möglichen Schalterstellungen der Schaltgeräte die schaltgerätereduzierten Parametersätze für die Schutzgeräte ermitteln. Dabei können unter anderem Zusammenhänge hergestellt werden, wie zum Beispiel eine Zuordnung von Betriebszuständen des gesamten Energieversorgungsnetzwerks zu gruppenspezifischen Betriebszuständen von Gruppen $G_i$ und einer Zuordnung von gruppenspezifischen, schalterreduzierten Parametersätzen zu diesen gruppenspezifischen Betriebszuständen und/oder dergleichen. Die Parametersätze, insbesondere die schalterreduzierten Parametersätze, brauchen nur ein einziges Mal ermittelt zu werden, solange an der Topologie des Energieversorgungsnetzwerks keine Änderungen vorgenommen werden.

Es wird ferner vorgeschlagen, dass die Parametersätze zentral durch die Einrichtung zum Ermitteln von Parametersätzen für Schutzgeräte in einer Datenbank abrufbar gespeichert werden. Die Parametersätze können somit jederzeit bei Bedarf abgerufen und genutzt werden. Bei Änderungen am Betriebszustand des Energieversorgungsnetzwerks können die Parametersätze sehr einfach und schnell verfügbar gemacht werden, weil sie beispielsweise lediglich aus der Datenbank abgerufen zu werden brauchen.

Weiterhin wird vorgeschlagen, dass die Einrichtung zum Ermitteln von Parametersätzen für Schutzgeräte den Betriebszustand des Energieversorgungsnetzwerks ermittelt und abhängig vom ermittelten Betriebszustand die Parametersätze an die Schutzgeräte übermittelt. Hierzu ist die Einrichtung zum Ermitteln von Parametersätzen für Schutzgeräte vorzugsweise mit dem Energieversorgungsnetzwerk gekoppelt, beispielsweise nach Art eines Online-Modus, sodass einrichtungsseitig Daten in Bezug auf den aktuellen Betriebszustand des Energieversorgungsnetzwerks verfügbar sind. Nachdem der Betriebszustand ermittelt ist und aus der Datenbank die passenden, insbesondere schalterreduzierten, Parametersätze abgerufen sind, können die entsprechenden Parametersätze an die jeweiligen Schutzgeräte übermittelt werden, die diese Parametersätze dann anwenden beziehungsweise nutzen.

Darüber hinaus wird vorgeschlagen, dass eine Änderung des Betriebszustands des Energieversorgungsnetzwerks ermittelt wird und die Einrichtung zum Ermitteln von Parametersätzen für Schutzgeräte abhängig von der Änderung des Betriebszustands aus der Datenbank diejenigen Parametersätze ermittelt, die nach der Änderung des Betriebszustands genutzt werden sollen, und diese an die Schutzgeräte übermittelt. Dadurch ist es möglich, automatisiert möglichst schnell die Schutzgeräte anzupassen, sodass auch bei schnellen Änderungen am Betriebszustand im Wesentlichen möglichst immer die optimale Schutzfunktionalität durch die Schutzgeräte erreicht werden kann.

Die Zuverlässigkeit des bestimmungsgemäßen Betriebs des Energieversorgungsnetzwerks kann dadurch verbessert werden.

Gemäß einer Weiterbildung wird vorgeschlagen, dass eine Änderung der Schaltungsstruktur des Energieversorgungsnetzwerks ermittelt wird und nur die von der Änderung der Schaltungsstruktur betroffenen Parametersätze neu ermittelt werden. Dadurch kann Aufwand für die Anpassung der Schutzgeräte an die Änderung der Schaltungsstruktur des Energieversorgungsnetzwerks reduziert werden.

Die für das erfindungsgemäße Verfahren angegebenen Vorteile und Wirkungen gelten natürlich gleichermaßen auch für die erfindungsgemäße Einrichtung und den erfindungsgemäßen Leitstand und umgekehrt. Insofern können Verfahrensmerkmale auch als Vorrichtungsmerkmale und umgekehrt formuliert sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:

FIG 1 eine schematische Blockschaltbilddarstellung eines elektrischen Energieversorgungsnetzwerks mit daran angeschlossenen elektrischen Einrichtungen, wobei das Energieversorgungsnetzwerk zum Steuern eines Energieflusses elektrische Schaltgeräte und Schutzgeräte aufweist; und

FIG 2 ein schematisches Flussdiagramm zum Erzeugen von Parametersätzen für die Schutzgeräte.

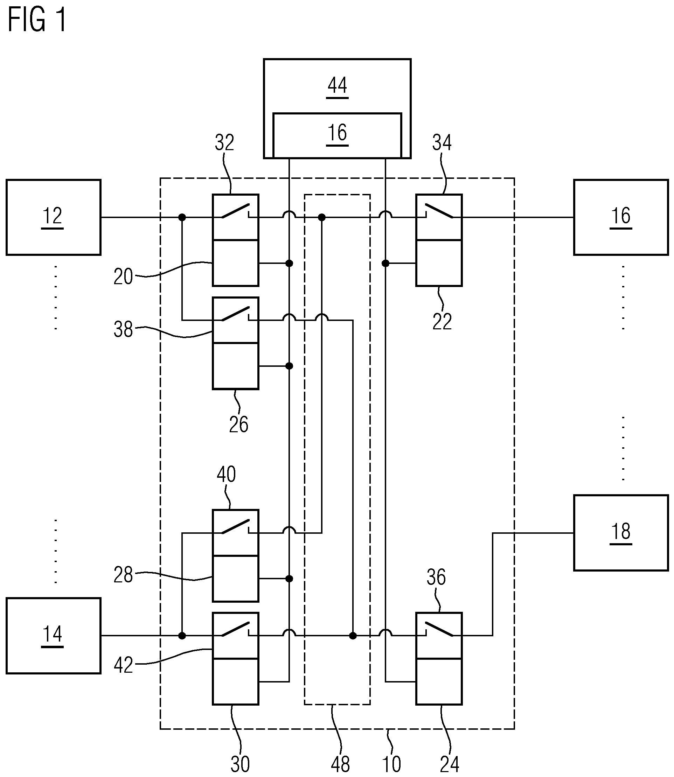

FIG 1 zeigt in einer schematischen Blockschaltbilddarstellung ein elektrisches Energieversorgungsnetzwerk 10 mit daran angeschlossenen elektrischen Einrichtungen 12, 14, 16, 18. Bei den elektrischen Einrichtungen 10, 12, 16, 18 kann es sich um elektrische Verbraucher, beispielsweise eine Industrieanlage oder dergleichen, eine lokale Unterversorgung für einen Ortsteil einer Stadt, eine Windkraftanlage und/oder dergleichen handeln. Wenigstens eine der Einrichtungen 10, 12, 16, 18 kann elektrische Energie erzeugen, die durch wenigstens eine andere der elektrischen Einrichtungen 10, 12, 16, 18 verbraucht werden kann. Während des bestimmungsgemäßen Betriebs der Einrichtungen 12, 14, 16, 18 kann eine jeweilige der Einrichtungen 12, 14, 16, 18 ihren Betriebszustand hinsichtlich des Energieverbrauchs auch ändern. So kann es zum Beispiel bei der Industrieanlage auftreten, dass diese in einem bestimmten Zeitraum elektrische Energie abgibt, wohingegen sie in einem anderen Zeitraum elektrische Energie aufnimmt.

Die elektrischen Einrichtungen 12, 14, 16, 18 sind an das Energieversorgungsnetzwerk 10 angeschlossen. Über das Energieversorgungsnetzwerk 10 wird die elektrische Energie zwischen den Einrichtungen 12, 14, 16, 18 verteilt. In FIG 1 sind lediglich vier Einrichtungen 12, 14, 16, 18 dargestellt. Es ist jedoch möglich, dass erheblich mehr elektrische Einrichtungen an das elektrische Energieversorgungsnetzwerk 10 angeschlossen sind.

Um das Verteilen der elektrischen Energie zwischen den Einrichtungen 12, 14, 16, 18 zu erreichen, stellt das Energieversorgungsnetzwerk 10 entsprechende elektrische Verbindungen unter Nutzung von elektrischen Leitungen her, die mittels Schaltgeräten 32, 34, 36, 38, 40, 42 des Energieversorgungsnetzwerks 10 gesteuert werden können. Diese machen die elektrischen Leitungen einer Netzwerktopologie 48 des Energieversorgungsnetzwerks 10 bedarfsweise verfügbar.

Das Energieversorgungsnetzwerk 10 weist ferner Schutzgeräte 20, 22, 24, 26, 28, 30 auf, die vorliegend jeweiligen Schaltgeräten 32, 34, 36, 38, 40, 42 zugeordnet sind. In alternativen Ausführungsbeispielen kann dies auch anders sein, indem Schutzgeräte unabhängig von Schaltgeräten angeordnet sein können. Für die Erfindung ist dies jedoch nicht relevant.

Die Schutzgeräte 20, 22, 24, 26, 28, 30 dienen dazu, einen oder mehrere Zustandsdaten des Energieversorgungsnetzwerks 10, wie zum Beispiel einen elektrischen Strom, eine elektrische Spannung, eine Temperatur und/oder dergleichen, an einer bestimmten lokalen Position zu erfassen und Schaltmaßnahmen, beispielsweise in Bezug auf die Schutzgeräte 20, 22, 24, 26, 28, 30, einzuleiten. Darüber hinaus stehen die Schutzgeräte 20 bis 30 mit einem Leitstand 44 des Energieversorgungsnetzwerks 10 in Kommunikationsverbindung.

Die Schaltzustände der Schaltgeräte 32 bis 42 zu einem vorgegebenen Zeitpunkt bilden einen jeweiligen Betriebszustand des Energieversorgungsnetzwerks 10. Jedes Schutzgerät 20 bis 30 nutzt für einen jeweiligen Betriebszustand des Energieversorgungsnetzwerks 10 einen jeweiligen individuellen, betriebszustandsspezifischen Parametersatz, um für diesen Betriebszustand eine gewünschte Schutzfunktion durch das jeweilige Schutzgerät 20 bis 30 zu realisieren.

Die Schaltgeräte 32 bis 42 können zum Beispiel als Leistungsschalter, als Lastschalter oder auch als Trennschalter ausgebildet sein. Es können auch Kombinationen hiervon als Schaltgerät 32 bis 42 vorgesehen sein. Die Schaltgeräte 32 bis 42 brauchen nicht identisch ausgebildet zu sein.

Der Leitstand 44 weist eine Einrichtung 46 zum Ermitteln von Parametersätzen für die Schutzgeräte 20 bis 30 des Energieversorgungsnetzwerks 10 aus. Die Einrichtung 46 ist ausgebildet, für wenigstens eines der Schutzgeräte 20 bis 30 die betriebszustandsspezifischen Parametersätze auszuwerten, um schaltgerätereduzierte Parametersätze zu ermitteln, die unabhängig von Schaltzuständen wenigstens eines der Schaltgeräte 32 bis 42 sind. Dies wird im Folgenden noch weiter erläutert.

Die Schutzgeräte 20 bis 30 stehen in Kommunikationsverbindung mit dem Leitstand 44, sodass Daten, Signale und/oder dergleichen von den Schutzgeräten 20 bis 30 abgerufen werden können. Zugleich können Parametersätze vom Leitstand 44 an die jeweiligen Schutzgeräte 20 bis 30 übermittelt werden, sodass die Schutzgeräte 20 bis 30 ihre Schutzfunktion gemäß einem jeweils aktuellen betriebszustandsspezifischen Parametersatz einstellen können.

Zu diesem Zweck kann einerseits vorgesehen sein, dass der jeweils anzuwendende betriebszustandsspezifische Parametersatz vom Leitstand 44 an das jeweilige der Schutzgeräte 20 bis 30 übermittelt wird, sodass das jeweilige der Schutzgeräte 20 bis 30 den empfangenen betriebszustandsspezifischen Parametersatz aktuell, vorzugsweise unmittelbar, anwendet. Natürlich können die beiden vorgenannten Optionen auch miteinander kombiniert werden.

Mit der Erfindung ist es möglich, einen automatisierten adaptiven Netzschutz für das Energieversorgungsnetzwerk 10 zu erreichen. Im Folgenden wird anhand von Beispielen das allgemeine Ermitteln der schaltgerätereduzierten Parametersätze gemäß der Erfindung erläutert.

Die Anzahl von Betriebszuständen $FP_i$ des Energieversorgungsnetzwerks 10 ist durch die Anzahl möglicher Kombinationen der Schaltzustände der Schaltgeräte 32 bis 42 bestimmt. Für alle Betriebszustände des Energieversorgungsnetzwerks 10 können Schutzparameter ermittelt und in einer zentralen Datenbank gespeichert werden, beispielsweise im Leitstand 44. Jeder Betriebszustand $FP_i$ kann für die Menge aller Schaltgeräte $k = 1...n_s$ die Schaltzustände $S_k$ enthalten, gemäß der folgenden Formel:

$$FP_i : \left\{ S_1, S_2 \, ... \, S_{n_S} \right\} \tag{1}$$

Für jeden Betriebszustand $FP_i$ können dann betriebszustandsspezifische Parameter $x_{j,k,i}$ für sämtliche der Schutzgeräte 20 bis 30 ermittelt werden, und zwar unter Nutzung der folgenden Formel:

$$FP_i : \left\{ \underbrace{\{x_{1,1,i}, \, x_{1,2,i}, \, ..., \, x_{1,n_1,i}\}}_{Parametersatz \, von \, Schutzgerät \, 1} , \underbrace{\{x_{2,1,i}, \, x_{2,2,i}, \, ..., \, x_{2,n_2,i}\}}_{Schutzgerät \, 2} ... \underbrace{\{x_{m,1,i}, \, x_{m,2,i}, \, ..., \, x_{m,n_m,i}\}}_{Schutzgerät \, m} \right\}$$

$$\tag{2}$$

Hier ist j die Schutzgeräte-ID, k die Parameter-ID und i der Index des Betriebszustands. Die Anzahl der Betriebszustände ist eine Exponentialfunktion zur Basis zwei und mit dem Exponenten $n_s$, welcher der Anzahl der Schaltgeräte entspricht:

$$n_{NZ} = 2^{n_S}$$

Daraus ergibt sich die Anzahl der Parametersätze für ein jeweiliges der Schutzgeräte 20 bis 30 gemäß folgender Formel:

$$n_{PS,i} = 2^{n_S}$$

Durch Analyse von realen Netzdaten ergibt sich, dass die Parametersätze der Schutzgeräte 20 bis 30 bezüglich der Betriebszustände Redundanzen aufweisen. Diese Erkenntnis wird gemäß der Erfindung benutzt, um die Anzahl der tatsächlich zu betrachtenden betriebszustandsspezifischen Parametersätze der Schutzgeräte 20 bis 30 zu reduzieren. Hierzu können die folgenden Schritte durchgeführt werden:

1. Zusammenfassen von im Wesentlichen etwa gleichen, vorzugsweise genau gleichen, Parametersätzen der Schutzgeräte 20 bis 30. Beispielsweise haben Abweichungen in Bezug auf die zugefassten Parametersätze im Wesentlichen keinen signifikanten Einfluss auf die Schutzfunktionalität. Die im Wesentlichen etwa gleichen Parametersätze können zum Beispiel mit allen zugehörigen Netzzuständen unterschiedlichen Varianten überkreuzt analysiert werden. Zum Beispiel kann eine Schutzanalyse mittels PSA PSS.SINCAL durchgeführt werden, einem Werkzeug der Firma Siemens, und zwar PSS®SINCAL - Analyse und Planung von Stromnetzen. Wenn die Überkreuzanalyse durch PSA oder andere Schutzanalysewerkzeuge keine Probleme ergibt, können die Parameter auch zusammengefasst werden. Die Parametersätze der Schutzgeräte 20 bis 30 werden dadurch vom jeweiligen Betriebszustand entkoppelt:

$$FP_i: \left\{ \underbrace{\{x_{1,1,ip_1},\ x_{1,2,ip_1},\ ...,\ x_{1,n_1,ip_1}\}}_{\substack{Parametersatz\ von\\Schutzgerät\ 1}},\ \underbrace{\{x_{2,1,ip_2},\ x_{2,2,ip_2},\ ...,\ x_{2,n_2,ip_2}\}}_{Schutzgerät\ 2}\ ...\ \underbrace{\{x_{m,1,ip_3},\ x_{m,2,ip_3},\ ...,\ x_{m,n_m,ip_3}\}}_{Schutzgerät\ m} \right\}$$

$$(3)$$

In $x_{j,k,ip}$ steht der Index *ip* nicht mehr für den Betriebszustand, sondern für die Identifikation eines Parametersatzes.
2. Zerlegen des gesamten Energieversorgungsnetzwerks 10 zu Gruppen $G_i$. Die relevanten Schutzgeräte 20 bis 30 werden jeweils einer der Gruppen $G_i$ zugeordnet:

$$G_l: \widetilde{FP_i}: \left\{ \underbrace{\{x_{1,1,ip_1},\ x_{1,2,ip_1},\ ...,\ x_{1,n_1,ip_1}\}}_{\substack{Parametersatz\ von\\Schutzgerät\ 1\ in\ G_l}},\ \underbrace{\{x_{2,1,ip_2},\ x_{2,2,ip_2},\ ...,\ x_{2,n_2,ip_2}\}}_{Schutzgerät\ 2\ in\ G_l}\ ...\ \underbrace{\{x_{m,1,ip_3},\ x_{m,2,ip_3},\ x_{m,n_m,ip_3}\}}_{Schutzgerät\ m\ in\ G_l} \right\}$$

$$(4)$$

Werden Schaltzustände geändert, können angepasste Parametersätze aus der Datenbank durch die folgenden Schritte aufgefunden werden, um die Schutzgeräte 20 bis 30 neu zu parametrieren. Hierzu können die beiden folgenden Schritte ausgeführt werden:

1. Abarbeitung von Schalteridentifikationen, deren Schaltzustand geändert wurde. Die Information zum Schaltzustand der Schaltgeräte 32 bis 42 wird vom Leitstand bereitgestellt.

2. Strukturierung und Abarbeitung aus Sicht der betroffenen Schutzgeräte 20 bis 30. Ermitteln der Parametersätze anhand des aktuellen Betriebszustands und der Daten der Datenbank.

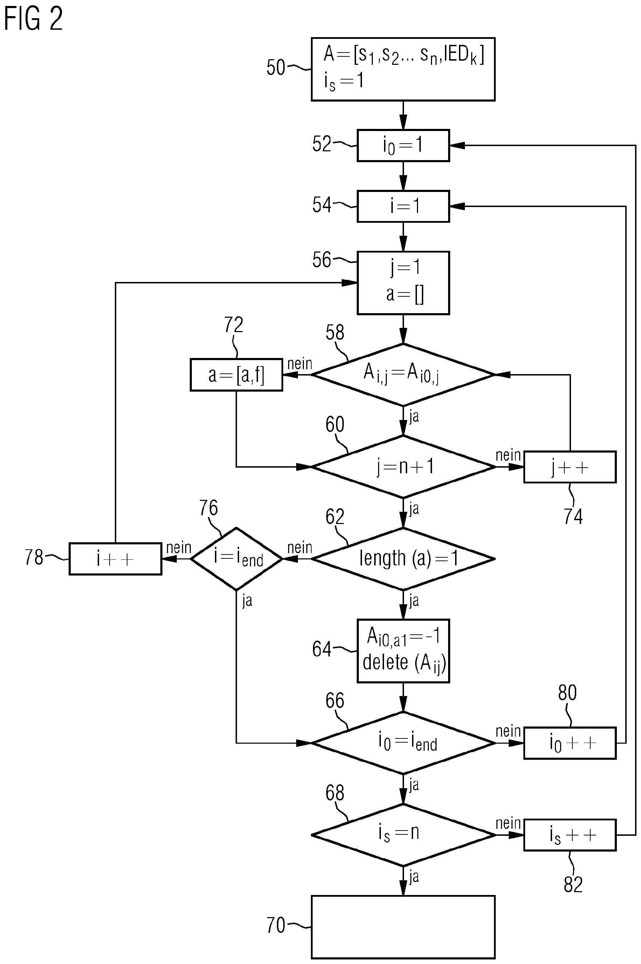

FIG 2 zeigt ein schematisches Flussdiagramm zur Durchführung des Schritts 2 gemäß der Formel (4), wie oben angegeben. Die Verfahrensführung beginnt mit Schritt 50, bei dem die für die Gruppe $G_i$ die zugehörigen Schaltgeräte $S_1$ bis $S_n$ sowie Schutzgeräte $IED_k$ vorgegeben werden. Die Matrix A entspricht der Tabelle 4, wie im Folgenden noch erläutert werden wird. Eine Variable $i_s$ wird auf 1 gesetzt. Die Variable $i_s$ bezieht sich auf das jeweils aktuell betrachtete Schaltgerät.
Das Verfahren wird mit Schritt 52 fortgeführt, indem eine Variable $i_0$ auf 1 gesetzt wird. Die Variable $i_0$ bedeutet eine Referenzzeile $i_0$. Sodann wird das Verfahren mit Schritt 54 fortgeführt, bei dem eine Variable i auf 1 gesetzt wird. In einem folgenden Schritt 56 wird eine weitere Variable j ebenfalls auf 1 gesetzt.
In einem weiteren Schritt 58 wird geprüft, ob ein Element aus der im Schritt 50 vorgegebenen Menge A, und zwar ein Element $A_{i,j}$, einem Element $A_{i_0,j}$ entspricht. Die Werte der Elemente von Zeile *i* werden mit den Werten der Elemente von ReferenzZeile $i_0$ verglichen. $A_{i,j}$ und $A_{i_0,j}$ sind die Elemente in der Zeile *i* (*$i_0$*) und Spalte *j* von Matrix *A*.
Sind die Größen gleich, wird das Verfahren mit Schritt 60 fortgeführt. Sind die beiden Parameter jedoch verschieden, erfolgt eine Verzweigung zu einem Schritt 72. Im Schritt 72 wird ein Vektor a als Funktion eines vorhergehenden Vektors a und der Variable j bestimmt, die dem Vektor a hinzugefügt wird. Im Folgenden wird das Verfahren ebenfalls im Schritt 60 fortgesetzt.
Im Schritt 60 wird geprüft, ob die Variable j der Zählvariable n+1 entspricht. Ist dies nicht der Fall, wird in einem Schritt 74 die Variable j um 1 erhöht und das Verfahren mit Schritt 58 fortgesetzt.
Die Schritte 58, 60, 72 und 74 bilden eine innere Schleife, die beispielsweise wie folgt weiter ergänzend erläutert werden kann:

Zum Beispiel (Dieses Beispiel kann der im Folgenden noch diskutierten Tabelle 4 zugeordnet werden) : *$i_0$ = 1, i = 2*

Wenn *j = 1: $A_{i0=1,1}$ = $A_{i=2,1}$ = 0 → a = [leer] = []; j = 1 < n + 1 = 4 → j = j + 1 = 2*

Wenn *j = 2: $A_{i0=1,1}$ = $A_{i=2,1}$ = 0 → a = [α] = []; j = 2 < n + 1 = 4 → j = j + 1 = 3*

Wenn *j = 3: $A_{i0=1,1}$ = 0, $A_{i=2,1}$ = 1 → a = [a,j] = [3]; j = 3 < n + 1 = 4 ---> j = j + 1 = 4*

Wenn $j = 4$: $A_{i0=1,1} = 2,1$, $A_{i=2,1} = 2,2 \rightarrow a = [a,j] = [3,4]$; $j = 4 < n + 1 = 4 \rightarrow$ end

*Length*($a$) = 2

Die Überprüfung der Länge vom Vektor a, das heißt, die Anzahl der Elemente, gehört zum Schritt 62.

Ist im Schritt 60 die Gleichheit positiv festgestellt, wird das Verfahren mit Schritt 62 fortgesetzt. Im Schritt 62 wird geprüft, ob die Länge des Vektors, und zwar die Anzahl seiner Elemente, das heißt, length (a) = 1, entspricht. Diese Funktion kann zum Beispiel wie folgt ergänzend erläutert werden:

Zum Beispiel (Auch dieses Beispiel kann der im Folgenden noch diskutierten Tabelle 4 zugeordnet werden) : $i_0 = 1$, $i = 3$ Wenn $j = 1$: $A_{i0=1,1} = A_{i=3,1} = 0 \rightarrow a = [leer] = []$; $j = 1 < n + 1 = 4 \rightarrow j = j + 1 = 2$

Wenn $j = 2$: $A_{i0=1,1} = 0$, $A_{i=3,1} = 1 \rightarrow a = [a,j] = [2]$; $j = 2 < n + 1 = 4 \rightarrow j = j + 1 = 3$

Wenn $j = 3$: $A_{i0=1,1} = A_{i=3,1} = 0 \rightarrow a = [a] = [2]$; $j = 3 < n + 1 = 4 \rightarrow j = j + 1 = 4$

Wenn $j = 4$: $A_{i0=1,1} = A_{i=3,1} = 2,1 \rightarrow a = [a] = [2]$; $j = 4 < n + 1 = 4 \rightarrow$ end

*Length*($a$) = 1

Wird diese Prüfung positiv festgestellt, wird das Verfahren mit Schritt 64 fortgesetzt.

Im Schritt 64 wird das Element $A_{i0,a1}$ auf -1 gesetzt. Die Zeile $A_i$ wird gelöscht. Das Verfahren wird dann mit Schritt 66 fortgesetzt.

Im Schritt 66 wird geprüft, ob die Variable $i_0$ einem Wert $i_{END}$ entspricht. Ist dies nicht der Fall, wird das Verfahren mit Schritt 80 fortgesetzt und die Variable $i_0$ um 1 erhöht. Das Verfahren wird dann mit Schritt 54 fortgesetzt.

Ist hingegen die Gleichheit in Schritt 66 festgestellt worden, wird das Verfahren mit Schritt 68 fortgesetzt, und es wird geprüft, ob die Variable $i_S$ gleich n ist. Ist dies nicht der Fall, das heißt, die Variable $i_S$ ist ungleich n,

verzweigt die Verfahrensführung und wird im Schritt 82 fortgesetzt. Im Schritt 82 wird die Variable $i_S$ um eins erhöht. Das Verfahren wird sodann mit Schritt 52 fortgesetzt.

Ist die Bedingung im Schritt 68 hingegen positiv erfüllt, wird das Verfahren mit Schritt 70 fortgesetzt, und es werden Spalten aus der Matrix A gelöscht, in denen nur die Werte -1 vorkommen. Das Verfahren wird dann beendet.

Im Folgenden soll anhand eines Ausführungsbeispiels mit drei Schaltern S1, S2 und S3 sowie drei Schutzgeräten IED1, IED2 und IED3 die Verfahrensführung weiter erläutert werden. Die Schaltgeräte S1, S2, S3 können den Schaltgeräten 32 bis 42 aus FIG 1 entsprechen. Die Schutzgeräte IED1 bis IED3 können den Schutzgeräten 20 bis 30 aus FIG 1 entsprechen.

Bei dem vorgenannten Energieversorgungsnetz mit drei Schaltgeräten S1, S2, S3 und drei Schutzgeräten IED1, IED2, IED3 ergeben sich acht Betriebszustände für das Energieversorgungsnetzwerk, die in der folgenden Tabelle 1 dargestellt sind.

Tabelle 1

| Betriebszustand | S1 | S2 | S3 |
|---|---|---|---|
| 1 | 0 | 0 | 0 |
| 2 | 0 | 0 | 1 |
| 3 | 0 | 1 | 0 |
| 4 | 0 | 1 | 1 |
| 5 | 1 | 0 | 0 |
| 6 | 1 | 0 | 1 |
| 7 | 1 | 1 | 0 |
| 8 | 1 | 1 | 1 |

Für jeden Betriebszustand können dann Parametersätze für sämtliche Schutzgeräte IED1 bis IED3 ermittelt werden. In der folgenden Tabelle 2 sind für die acht möglichen Betriebszustände die einzelnen Parametersätze der Schutzgeräte IED1 bis IED3 angegeben. Dadurch ist ein jeweiliger Parametersatz durch ein Wertepaar bestimmt, bei dem der erste Wert einer Nummer beziehungsweise Identifikation des Schutzgeräts entspricht und der zweite Wert einem jeweiligen Betriebszustand des Energieversorgungsnetzwerks. Tabelle 2 kann der Gleichung (2) zugeordnet werden.

Tabelle 2

| Betriebszustand | IED1 | IED2 | IED3 |
|---|---|---|---|
| 1 | 1.1 | 2.1 | 3.1 |
| 2 | 1.2 | 2.2 | 3.2 |
| 3 | 1.3 | 2.3 | 3.3 |
| 4 | 1.4 | 2.4 | 3.4 |
| 5 | 1.5 | 2.5 | 3.5 |
| 6 | 1.6 | 2.6 | 3.6 |
| 7 | 1.7 | 2.7 | 3.7 |
| 8 | 1.8 | 2.8 | 3.8 |

Aus Tabelle 2 ergibt sich Tabelle 3 dadurch, dass im Wesentlichen etwa gleiche Parametersätze für die Schutzgeräte IED1 bis IED3 zusammengefasst werden. Die Parametersätze der Schutzgeräte IED1 bis IED3 werden dann vom Betriebszustand des Energieversorgungsnetzwerks entkoppelt. In der folgenden Tabelle 3 sind ebenfalls Wertepaare angegeben, bei dem der jeweils erste Wert wieder die Nummer des Schutzgeräts S1 bis S3 bezeichnet, wohingegen der zweite Wert eine Identifikation beziehungsweise Nummer eines Parametersatzes darstellt. Diese Analyse führt dann zur Tabelle 3.

Tabelle 3

| Betriebszustand | IED1 | IED2 | IED3 |
|---|---|---|---|
| 1 | 1.1 | 2.1 | 3.1 |
| 2 | 1.1 | 2.2 | 3.1 |
| 3 | 1.2 | 2.1 | 3.2 |
| 4 | 1.2 | 2.2 | 3.2 |
| 5 | 1.3 | 2.1 | 3.3 |
| 6 | 1.3 | 2.1 | 3.3 |
| 7 | 1.1 | 2.1 | 3.4 |
| 8 | 1.1 | 2.1 | 3.4 |

Wie aus Tabelle 3 ersichtlich ist, ergibt sich eine Redundanz der Parametersätze in Bezug auf die Betriebszustände. Tabelle 3 kann der Gleichung (3) zugeordnet werden.

Die folgenden Ausführungen beziehen sich darauf, dass das Energieversorgungsnetz durch Analyse in zwei Gruppen gegliedert werden kann. Die betroffenen Schutzgeräte IED1 bis IED3 werden in jeweils eine eigene Gruppe geschrieben. Eine folgende Tabelle 4 zeigt dieses Vorgehen anhand des Schutzgeräts IED2. Aus der ersten und zweiten Zeile der Tabelle 4 ist ersichtlich, dass das Schaltgerät S3 für die Auswahl des Parametersatzes relevant ist. Dies bestätigt auch die Prüfung der Zeilen 3 und 4 der Tabelle 2. Aus den Zeilen 1 bis 4 der Tabelle 4 ergibt sich somit auch, dass das Schaltgerät S2 nicht relevant ist.

Tabelle 4

| S1 | S2 | S3 | IED2 |
|---|---|---|---|
| 0 | 0 | 0 | 2.1 |
| 0 | 0 | 1 | 2.2 |
| 0 | 1 | 0 | 2.1 |
| 0 | 1 | 1 | 2.2 |

(fortgesetzt)

| S1 | S2 | S3 | IED2 |
|----|----|----|------|
| 1 | 0 | 0 | 2.1 |
| 1 | 0 | 1 | 2.1 |
| 1 | 1 | 0 | 2.1 |
| 1 | 1 | 1 | 2.1 |

Aus den Zeilen 6 bis 8 ergibt sich ferner, dass hierbei das Schaltgerät S3 nicht relevant ist. Dies ist in der folgenden Tabelle 5 dargestellt, in der die Angabe -1 bedeutet, dass für die Auswahl des Parametersatzes das jeweilige Schaltgerät nicht relevant ist. Aus Tabelle 5 ergibt sich ferner, dass Zusammenfassungen möglich sind, so zum Beispiel die Zeilen 1 und 3 sowie die Zeilen 2 und 4 der Tabelle 4. Ferner können jeweils die Zeilen 5 und 6 sowie 7 und 8 der Tabelle 4 zusammengefasst werden.

Dies führt zu der im Folgenden dargestellten Tabelle 5.

Tabelle 5

| S1 | S2 | S3 | IED2 |
|----|----|----|------|
| 0 | -1 | 0 | 2.1 |
| 0 | -1 | 1 | 2.2 |
| 0 | -1 | 0 | 2.1 |
| 0 | -1 | 1 | 2.2 |
| 1 | 0 | -1 | 2.1 |
| 1 | 0 | -1 | 2.1 |
| 1 | 1 | -1 | 2.1 |
| 1 | 1 | -1 | 2.1 |

Zum Bespiel (Dieses Beispiel kann dem Schritt 64 zugeordnet werden) : $i_0 = 1$, $i = 3$ *und $a_1 = 2$*
$A_{1,2} = -1$ und die dritte Zeile in der Matrix $A$ ($A_{3,:}$) wird gelöscht.

Die Tabelle 5 wird dadurch vereinfacht, wie die folgende Tabelle 5a zeigt:

Tabelle 5a

| S1 | S2 | S3 | IED2 |
|----|----|----|------|
| 0 | -1 | 0 | 2.1 |
| 0 | 0 | 1 | 2.2 |
|  |  |  |  |
| 0 | 1 | 1 | 2.2 |
| 1 | 0 | 0 | 2.1 |
| 1 | 0 | 1 | 2.1 |
| 1 | 1 | 0 | 2.1 |
| 1 | 1 | 1 | 2.1 |

Daraus ergibt sich dann die im Folgenden dargestellte Tabelle 6, in der die Zusammenfassungen durchgeführt wurden.

Tabelle 6

| S1 | S2 | S3 | IED2 |
|----|----|----|------|
| 0 | -1 | 0 | 2.1 |

EP 4 513 694 A1

(fortgesetzt)

| S1 | S2 | S3 | IED2 |
|---|---|---|---|
| 0 | -1 | 1 | 2.2 |
| 1 | -1 | -1 | 2.1 |
| 1 | -1 | -1 | 2.1 |

Aus Tabelle 6 ist ferner ersichtlich, dass die Zeilen 3 und 4 ebenfalls zusammengefasst werden können.

Daraus ergibt sich dann die im Folgenden dargestellte Tabelle 7.

| S1 | S2 | S3 | IED2 |
|---|---|---|---|
| 0 | -1 | 0 | 2.1 |
| 0 | -1 | 1 | 2.2 |
| 1 | -1 | -1 | 2.1 |

Tabelle 7

Wie aus Tabelle 7 ersichtlich ist, braucht für das Schutzgerät IED2 in den Parametersätzen das Schaltgerät S2 nicht berücksichtig zu werden. Auf Basis der Tabelle 7 kann somit die Erstellung des Parametersatzes für das Schutzgerät IED2 erfolgen.

Auf Basis der vorgenannten Tabelle 7 können dann die erforderlichen Parametersätze für die Schutzgeräte IED1 bis IED3 gemäß Tabelle 8 gewonnen werden.

Tabelle 8

| G1 | | | | |
|---|---|---|---|---|
| Fingerprint | S1 | S2 | IED1 | IED3 |
| 1 | 0 | 0 | 1.1 | 3.1 |
| 2 | 0 | 1 | 1.2 | 3.2 |
| 3 | 1 | 0 | 1.3 | 3.3 |
| 4 | 1 | 1 | 1.1 | 3.4 |

| G2 | | | |
|---|---|---|---|
| Fingerprint | S1 | S3 | IED2 |
| 1 | 0 | 0 | 2.1 |
| 2 | 0 | 1 | 2.2 |
| 3 | 1 | -1 | 2.1 |

Wie im Vergleich der Tabelle 8 mit der Tabelle 2 ersichtlich ist, kann der Aufwand für die Parametersätze mit der erfindungsgemäßen Verfahrensführung erheblich reduziert werden. Tabelle 8 kann der Gleichung (4) zugeordnet werden. Der erfindungsgemäße Nutzen steigt exponentiell mit der Anzahl der Schaltgeräte und der Schutzgeräte an. Nach der Vereinfachung gemäß Tabelle 8 ergeben sich zwei Gruppen mit insgesamt sieben teilnetzspezifischen Betriebszuständen. Dies sind Betriebszustände, die sich auf ein jeweiliges der ermittelten Teilnetze des Energieversorgungsnetzwerks beziehen.

Die Verfahrensführung für den zweiten Schritt wird wie im Beispiel durchgeführt: Zwei Zeilen werden verglichen. Wenn in den zwei Zeilen jeweils nur ein Element unterschiedlich ist, werden die zwei Elemente auf -1 gesetzt. Daraus kann sich auch die Zerlegung des Energieversorgungsnetzwerks ergeben, und zwar als Ergebnis der Tabellen 4 bis 7. Die Zuordnung jedes Schutzgeräts zu einer jeweiligen Gruppe $G_i$ wird durch die Verfahrensführung ermittelt. Daraus ergibt sich die Gruppierung. Im vorhergehenden Beispiel ist nur die Reduktion in Bezug auf das Schutzgerät IED 2 angegeben. Die Reduktion in Bezug auf die Schutzgeräte IED 1 und 3 ergeben sich entsprechend und sind im vorliegenden Ausführungsbeispiel einfacher.

12

Insgesamt können die folgenden Vorteile erreicht werden:

- Reduzierung des Aufwands in Bezug auf Parametersätze durch Identifikation von Redundanzen, wodurch eine Zerlegung des Energieversorgungsnetzwerks in Teilnetze erreicht werden kann.
- Reduzierung der Anzahl der Parametersätze für die Schutzgeräte entsprechend der Zuweisung der Schutzgeräte zu Teilnetzen.
- Direkte Verknüpfung der Reduzierung der Anzahl von Betriebszuständen lokaler Teilnetze mit der Reduzierung der Anzahl der Parametersätze.
- Strukturierter, einfach nachvollziehbarer Algorithmus, mit dem gegenüber AI-Verfahren eine geringe Fehleranfälligkeit erreicht werden kann.

Die Ausführungsbeispiele dienen ausschließlich der Erläuterung der Erfindung und sollen diese nicht beschränken.

Bezugszeichenliste

| | |
|---|---|
| 10 | Energieversorgungsnetzwerk |
| 12 | Einrichtung |
| 14 | Einrichtung |
| 16 | Einrichtung |
| 18 | Einrichtung |
| 20 | Schutzgerät |
| 22 | Schutzgerät |
| 24 | Schutzgerät |
| 26 | Schutzgerät |
| 28 | Schutzgerät |
| 30 | Schutzgerät |
| 32 | Schaltgerät |
| 34 | Schaltgerät |
| 36 | Schaltgerät |
| 38 | Schaltgerät |
| 40 | Schaltgerät |
| 42 | Schaltgerät |
| 44 | Leitstand |
| 46 | Einrichtung |
| 48 | Netzwerktopologie |
| 50 | Schritt |
| 52 | Schritt |
| 54 | Schritt |
| 56 | Schritt |
| 58 | Schritt |
| 60 | Schritt |
| 62 | Schritt |
| 64 | Schritt |
| 66 | Schritt |
| 68 | Schritt |
| 70 | Schritt |
| 72 | Schritt |
| 74 | Schritt |
| 76 | Schritt |
| 78 | Schritt |
| 80 | Schritt |
| 82 | Schritt |

**Patentansprüche**

1. Verfahren zum Parametrieren von Schutzgeräten (20, 22, 24, 26, 28, 30) eines Energieversorgungsnetzwerks (10), an welches eine Mehrzahl von Einrichtungen (12, 14, 16, 18) angeschlossen ist, von denen wenigstens eine Energie vom Energieversorgungsnetzwerk (10) empfängt und wenigstens eine Energie an das Energieversorgungsnetzwerk (10) abgibt, und welches eine Mehrzahl von Schaltgeräten (20, 22, 24, 26, 28, 30) zum Steuern einer Energieverteilung innerhalb des Energieversorgungsnetzwerks (10) aufweist, wobei Schaltzustände der Schaltgeräte (32, 34, 36, 38, 40, 42) zu einem vorgegebenen Zeitpunkt einen jeweiligen Betriebszustand des Energieversorgungsnetzwerks (10) bilden, wobei jedes Schutzgerät (20, 22, 24, 26, 28, 30) für einen jeweiligen Betriebszustand des Energieversorgungsnetzwerks einen betriebszustandsspezifischen Parametersatz nutzt, um für diesen Betriebszustand eine gewünschte Schutzfunktion durch das jeweilige Schutzgerät (20, 22, 24, 26, 28, 30) zu realisieren, **dadurch gekennzeichnet, dass** für wenigstens ein Schutzgerät die betriebszustandsspezifischen Parametersätze ausgewertet werden, um schaltgerätereduzierte Parametersätze zu ermitteln, die unabhängig von Schaltzuständen wenigstens eines der Schaltgeräte (32, 34, 36, 38, 40, 42) sind.

2. Verfahren nach Anspruch 1, **dadurch gekennzeichnet, dass** für das wenigstens ein Schutzgerät (20, 22, 24, 26, 28, 30) abhängig von den hierzu ermittelten schaltgerätereduzierten Parametersätzen reduzierte Parametersätze ermittelt werden und zum Parametrieren des wenigstens einen Schutzgeräts (20, 22, 24, 26, 28, 30) die reduzierte Parametersätze genutzt werden.

3. Verfahren nach einem der vorhergehenden Ansprüche, **dadurch gekennzeichnet, dass** das Verfahren nacheinander für diejenigen Schaltgeräte (32, 34, 36, 38, 40, 42) durchgeführt wird, für deren Schaltzustände eine Unabhängigkeit der Parametersätze ermittelt wurde.

4. Verfahren nach einem der vorhergehenden Ansprüche, **dadurch gekennzeichnet, dass** die schaltgerätereduzierten Parametersätze für ein jeweiliges Schutzgerät (20, 22, 24, 26, 28, 30) die jeweiligen betriebszustandsspezifischen Parametersätze ersetzen.

5. Verfahren nach einem der vorhergehenden Ansprüche, **dadurch gekennzeichnet, dass** das Parametrieren des wenigstens einen Schutzgeräts (20, 22, 24, 26, 28, 30) durch einen Leitstand (44) des Energieversorgungsnetzwerks (10) erfolgt.

6. Verfahren nach einem der vorhergehenden Ansprüche, **dadurch gekennzeichnet, dass** der Leitstand (44) eine Änderung des Energieversorgungsnetzwerks (10) in Bezug auf wenigstens eines der Schaltgeräte (32, 34, 36, 38, 40, 42) oder wenigstens eines durch ein jeweiliges der Schaltgeräte (32, 34, 36, 38, 40, 42) ermöglichten Schaltzustands ermittelt und die betriebszustandsspezifischen Parametersätze für die Schutzgeräte (20, 22, 24, 26, 28, 30) anpasst.

7. Verfahren nach Anspruch 6, **dadurch gekennzeichnet, dass** für das wenigstens ein Schutzgerät (20, 22, 24, 26, 28, 30) das Auswerten auf Basis der angepassten betriebszustandsspezifischen Parametersätze wiederholt wird, um neue schaltgerätereduzierte Parametersätze zu ermitteln, die unabhängig von Schaltzuständen wenigstens eines der Schaltgeräte (32, 34, 36, 38, 40, 42) sind.

8. Verfahren nach Anspruch 7, **dadurch gekennzeichnet, dass** die reduzierten Parametersätze auf Basis der neuen schaltgerätereduzierten Parametersätze aktualisiert werden.

9. Verfahren nach einem der vorhergehenden Ansprüche, **dadurch gekennzeichnet, dass** unabhängig vom bestimmungsgemäßen Betrieb des Energieversorgungsnetzwerks (10) eine Schaltungsstruktur des Energieversorgungsnetzwerks (10) ermittelt wird, wobei die Parametersätze für die Schutzgeräte (20, 22, 24, 26, 28, 30) entkoppelt vom bestimmungsgemäßen Betrieb des Energieversorgungsnetzwerks (10) ermittelt werden.

10. Verfahren nach Anspruch 9, **dadurch gekennzeichnet, dass** die Parametersätze zentral durch eine Einrichtung (46) zum Ermitteln von Parametersätzen für Schutzgeräte (20, 22, 24, 26, 28, 30) des Energieversorgungsnetzwerks (10) in einer Datenbank abrufbar gespeichert werden.

11. Verfahren nach Anspruch 10, **dadurch gekennzeichnet, dass** die Einrichtung (46) zum Ermitteln von Parametersätzen für Schutzgeräte (20, 22, 24, 26, 28, 30) den Betriebszustand des Energieversorgungsnetzwerks (10) ermittelt und abhängig vom ermittelten Betriebszustand die Parametersätze an die Schutzgeräte (20, 22, 24, 26, 28, 30) übermittelt.

**12.** Verfahren nach einem der Ansprüche 9 bis 11, **dadurch gekennzeichnet, dass** eine Änderung des Betriebszustands des Energieversorgungsnetzwerks (10) ermittelt wird und die Einrichtung (46) zum Ermitteln von Parametersätzen für Schutzgeräte (20, 22, 24, 26, 28, 30) abhängig von der Änderung des Betriebszustands aus der Datenbank diejenigen Parametersätze ermittelt, die nach der Änderung des Betriebszustands genutzt werden sollen, und diese an die Schutzgeräte (20, 22, 24, 26, 28, 30) übermittelt.

**13.** Verfahren nach einem der Ansprüche 9 bis 12, **dadurch gekennzeichnet, dass** eine Änderung der Schaltungsstruktur des Energieversorgungsnetzwerks (10) ermittelt wird und nur die von der Änderung der Schaltungsstruktur betroffenen Parametersätze neu ermittelt werden.

**14.** Einrichtung (46) zum Ermitteln von Parametersätzen für Schutzgeräte (20, 22, 24, 26, 28, 30) eines Energieversorgungsnetzwerks (10), an welches eine Mehrzahl von Einrichtungen (12, 14, 16, 18) angeschlossen ist, von denen wenigstens eine Energie vom Energieversorgungsnetzwerk (10) empfängt und wenigstens eine Energie an das Energieversorgungsnetzwerk (10) abgibt, und welches eine Mehrzahl von Schaltgeräten (32, 34, 36, 38, 40, 42) zum Steuern einer Energieverteilung innerhalb des Energieversorgungsnetzwerks (10) aufweist, wobei Schaltzustände der Schaltgeräte (32, 34, 36, 38, 40, 42) zu einem vorgegebenen Zeitpunkt einen jeweiligen Betriebszustand des Energieversorgungsnetzwerks (10) bilden, wobei jedes Schutzgerät (20, 22, 24, 26, 28, 30) für einen jeweiligen Betriebszustand des Energieversorgungsnetzwerks (10) einen betriebszustandsspezifischen Parametersatz nutzt, um für diesen Betriebszustand eine gewünschte Schutzfunktion durch das jeweilige Schutzgerät (20, 22, 24, 26, 28, 30) zu realisieren, **dadurch gekennzeichnet, dass**
die Einrichtung (46) ausgebildet ist, für wenigstens ein Schutzgerät (20, 22, 24, 26, 28, 30) die betriebszustandsspezifischen Parametersätze auszuwerten, um schaltgerätereduzierte Parametersätze zu ermitteln, die unabhängig von Schaltzuständen wenigstens eines der Schaltgeräte (32, 34, 36, 38, 40, 42) sind.

**15.** Leitstand (44) für ein Energieversorgungsnetzwerk (10), an welches eine Mehrzahl von Einrichtungen (12, 14, 16, 18) angeschlossen ist, von denen wenigstens eine Energie vom Energieversorgungsnetzwerk (10) empfängt und wenigstens eine Energie an das Energieversorgungsnetzwerk (10) abgibt, und welches eine Mehrzahl von Schaltgeräten (32, 34, 36, 38, 40, 42) zum Steuern einer Energieverteilung innerhalb des Energieversorgungsnetzwerks (10) aufweist, wobei Schaltzustände der Schaltgeräte (32, 34, 36, 38, 40, 42) zu einem vorgegebenen Zeitpunkt einen jeweiligen Betriebszustand des Energieversorgungsnetzwerks (10) bilden, wobei das Energieversorgungsnetzwerk Schutzgeräte (20, 22, 24, 26, 28, 30) für den bestimmungemäßen Betrieb aufweist, wobei jedes Schutzgerät (20, 22, 24, 26, 28, 30) für einen jeweiligen Betriebszustand des Energieversorgungsnetzwerks (10) einen betriebszustandsspezifischen Parametersatz nutzt, um für diesen Betriebszustand eine gewünschte Schutzfunktion durch das jeweilige Schutzgerät (20, 22, 24, 26, 28, 30) zu realisieren, wobei der Leitstand (44) eine Einrichtung (46) zum Ermitteln von Parametersätzen für die Schutzgeräte (20, 22, 24, 26, 28, 30) des Energieversorgungsnetzwerks (10) aufweist,
**dadurch gekennzeichnet, dass**
die Einrichtung (46) gemäß Anspruch 14 ausgebildet ist.

FIG 1

FIG 2

**Europäisches Patentamt**
**European Patent Office**
**Office européen des brevets**

# EUROPÄISCHER RECHERCHENBERICHT

Nummer der Anmeldung

EP 23 19 2693

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 194 656 A1 (ABB RESEARCH LTD [CH]) 9. Juni 2010 (2010-06-09) * das ganze Dokument * ----- | 1-15 | INV. H02H3/00 |
| A | KR 102 076 765 B1 (KANG MOON SIK [KR]; SONG HWA CHANG [KR]) 18. Mai 2020 (2020-05-18) * das ganze Dokument * ----- | 1,14 | ADD. H02H1/00 H02H7/26 |

**RECHERCHIERTE SACHGEBIETE (IPC)**

H02H

Der vorliegende Recherchenbericht wurde für alle Patentansprüche erstellt

| Recherchenort | Abschlußdatum der Recherche | Prüfer |
|---|---|---|
| München | 21. Februar 2024 | Trifonov, Antoniy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 19 2693

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2024

| Im Recherchenbericht angeführtes Patentdokument | Datum der Veröffentlichung | Mitglied(er) der Patentfamilie | Datum der Veröffentlichung |
|---|---|---|---|
| EP 2194656 A1 | 09-06-2010 | CN 102239645 A<br>EP 2194656 A1<br>US 2011282507 A1<br>WO 2010063816 A1 | 09-11-2011<br>09-06-2010<br>17-11-2011<br>10-06-2010 |
| KR 102076765 B1 | 18-05-2020 | KEINE | |

Für nähere Einzelheiten zu diesem Anhang : siehe Amtsblatt des Europäischen Patentamts, Nr.12/82

EPO FORM P0461